# EUROPEAN PATENT APPLICATION

(11) **EP 1 182 851 A1**
(43) Date of publication of application: **27.02.2002**
(21) Application number: 00118400.1
(22) Date of filing: 24.08.2000
(51) Int. Cl.: H04M 1/247, H01H 25/00

(54) **Input device for a portable communication device**

(71) Applicant: Sony International (Europe) GmbH, 10785 Berlin (DE)
(72) Inventor: Becker, Johannes, Sony International (Europe) GmbH, Heisenbergbogen 1, 85609 Aschheim (DE)
(74) Representative: Körfer, Thomas

(57) **Abstract**

An input device for entering control signals to a portable communication device (1) of a wireless communication system comprises an elongated scrolling means (2) which can be rotated around its axis for generating scrolling signals. In order to generate three different function activation signal said scrolling means can also be depressed on its middle portion (6) and can be actuated on its left or right end portion (7, 8), respectively. Said scrolling means may also provide a tactile feedback for the position of a users finger.

## Description

The present invention relates to an input device for entering control signals to a portable communication device of a wireless communication system.

Portable communication devices such as portable telephones of the recent generations provide a plurality of different functions and options which can be selected and activated by actuating different keys. Usually, text information or icons referring to the different functions and options are shown on a graphical display provided at the portable communication device. Modern displays have a relatively high resolution which makes it possible to show many information and/or icons at the same time on the display. However, in order to realise a clear arrangement only a few selectable options or functions should be shown at the same time. Other functions which are not shown can only be activated after navigating through different menus. Further, information or options are sometimes shown in lists or two-dimensional arrays and can only be activated by first navigating through these lists or arrays and pressing an enter key afterwards.

Navigation through the different menus or lists and two-dimensional arrays may be performed by one or more up/down scrolling keys or scrolling means. Such a scrolling means can be rotated around its axis for generating scrolling signals which are used to scroll through a list of information, such as names in a telephone book or characters shown on the display. A respective piece of information, such as a character, a name or an operation mode which may be selected upon pressing down the scrolling means or pressing a respective enter key is highlighted on the display so that the user knows which piece of information can actually be selected. A scrolling means which can be used for scrolling and which can be also depressed for activating the selectable option is disclosed in the European patent application EP 0 901 262 A2.

However, the known scrolling meanss only allow to scroll through a list or sequence of displayed pieces of information in a one-dimensional way. If pieces of information are displayed in a two-dimensional array, e.g. characters for entering text information, line after line has to be scrolled through in order to select one of the options. This results in a time-consuming and user-unfriendly handling of the communication device.

It is therefore an object of the present invention to provide an input device for entering control signals to a portable communication device of a wireless communication system which allows an easy and fast selection and activation of different options in menus, text entry and other situations.

The above object is achieved by an input device according to claim 1, which comprises an elongated scrolling means or scrolling key which can be rotated around its axis for generating scrolling signals, and which can be pressed down on its middle portion for generating a first function activation signal. According to the present invention said scrolling means further comprises switching means for generating a second and a third function activation signal upon actuation of its left or right end portion, respectively. The input device of the present invention therefore allows the generation of scrolling signals as well as of three additional function activation signals upon actuation of different portions of the scrolling means. For example, the signals generated by actuating the left or right end portion may be used as navigation signals for a horizontal movement of a cursor in a two-dimensional array. By pressing down the middle portion of the scrolling means the selected option may be finally activated.

The actuation of the end portions of the scrolling means may take place in different ways. For example, the switching means for generating the second and the third function activation signal can be actuated upon pressing on the left or right end portion of the scrolling means. In this case, the switching means preferably comprise two switches which are arranged under the left and right end portions of the scrolling means. Each switch is activated alone upon depression of either the left or right end portion but both switches are actuated simultaneously upon depression of the middle portion of the scrolling means. Alternatively, the switching means for generating the second and the third function activation signal are actuated upon shifting the scrolling means to the left or to the right. In this case, the input device preferably comprises three switches, the first switch being arranged under the middle portion of the scrolling means and the second and the third switch being arranged besides the left and right end portion, respectively.

In order to improve the handling of the input device said scrolling means may provide a tactile feedback for the position of a user's finger. This may be achieved by different shapes of the scrolling means. For example, the scrolling means may have at its middle portion a smaller diameter than at its end portions. In this case, the finger operating the scrolling means securely rests in the middle giving a guidance when rotating the scrolling means and a clear feeling when pressing or shifting the scrolling means. However, the scrolling means may also have at its middle portion a larger diameter than at its end portions providing also a tactile feedback for the fingers position. Finally, there may be additional palpable marks on the surface of the scrolling means.

The scrolling means according to the present invention is advantageously positioned in a central position under the display of the portable communication device, but can also be located at any other convenient position such as on one of the side walls.

In the following description, the present invention is explained in more detail by means of different embodiments relating to the enclosed drawings, in which
Figure 1 shows a schematic top view of a portable communication device of a wireless communication system according to the present invention, namely a portable telephone;
Figure 2 shows a side view of a portable telephone wherein the scrolling means is positioned on the upper left side wall;
Figure 3 shows a first embodiment of the input device according to the present invention wherein the second and the third function activation signal are generated upon depression of the end portions of the scrolling means;
Figure 4 shows a second embodiment of the input device wherein the second and third function activation signals are generated upon shifting the scrolling means;
Figure 5 shows a third embodiment of the input device comprising marks in order to provide a tactile feedback;
Figure 6 shows a fourth embodiment of the input device comprising marks at the end portions of the scrolling means; and
Figure 7 shows a fifth embodiment of the input device having a curved shape for providing a tactile feedback.

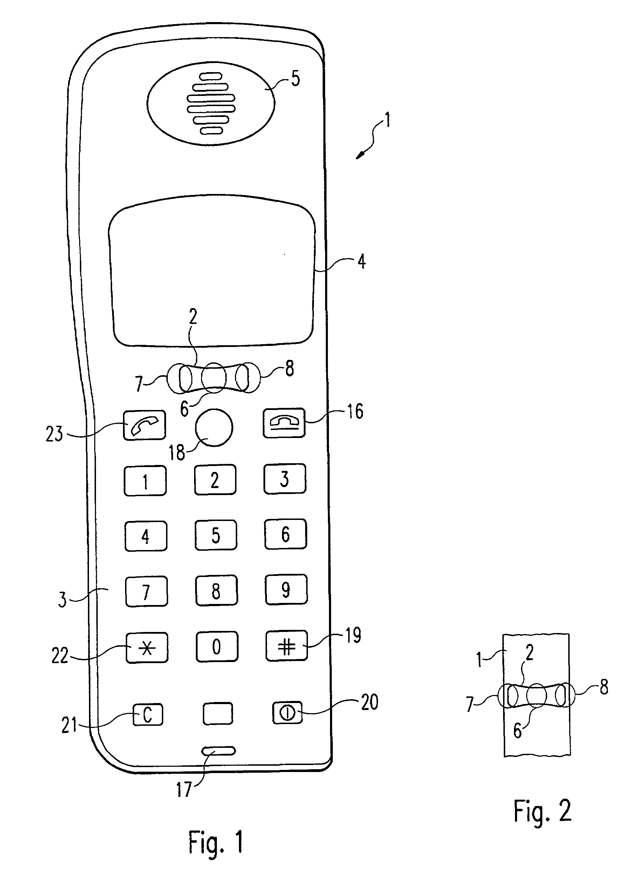

Figure 1 shows a schematic top view of a portable telephone 1 for a wireless telecommunication system as e.g. the GSM or UMTS system. Also the following description solely relates to a portable telephone, the portable communication device for a wireless communication system according to the present invention may also be any other device like a portable laptop computer, a portable palmtop computer or the like comprising functions for communicating data in a wireless communication system.

However, the present invention is particularly advantageous for portable communication devices which can be held and operated with a single hand.

The portable telephone 1 shown in figure 1 comprises a display means 4, on which pieces of information like characters, menu items, text information, names or the like can be displayed. The portable telephone 1 further comprises a loudspeaker 5 on the upper front part and a microphone 17 on the lower front part of the casing. Further, an enter or menu key 18 as enter means for selecting a respective menu item or function is provided. The portable telephone 1 further comprises the usual 10 alphanumeric keys 3 (numbers 0 to 9), a communication start key 23, a communication end key 16, a pound key 19, a star key 22, a power on/off key 20 and a clear key 21. Further, the portable telephone 1 comprises on its front side in a central position under the display means 4 as an input device a scrolling means or scrolling key 2, which is a rotatable key, a part of which is exposed to the outside. The exposed part can be touched by the finger of a user's hand and may be rotated clockwise (upwardly) or counterclockwise (downwardly) in order to scroll through pieces of information or lists displayed on the display means 4. Preferably, the display means 4 of the portable telephone 1 comprises a graphical display, which has a higher resolution than usual text or character displays.

As already mentioned, the scrolling means 2 has not necessarily to be positioned on the front side of the portable telephone 1 but can also be located at any other convenient position. Figure 2 shows an example wherein the scrolling means 2 is arranged on the upper left side wall of a portable telephone 1.

As already known from EP 0 901 262 A2, in addition to the generation of scrolling signals a first function activation signal can be generated by pressing or clicking the scrolling means 2 inwardly on its middle portion 6. This first function activation signal may be used for selecting a piece of information displayed on the display means 4, as e.g. a character, a menu function, a name, a telephone number or the like. Alternatively, the displayed piece of information may also be selected by pressing the enter or menu key 18.

According to the present invention, a second and a third function activation signal can additionally be generated upon actuation of the left end portion 7 or the right end portion 8 of the scrolling means 2. These two additional function activation signals may have different functionality depending on the information displayed on the display means 4. For example, if there is a two-dimensional array displayed on the display means 4, the second and the third function activation signal may be used for generating navigation signals for a horizontal movement of a cursor. Therefore, using only a single input device a user is able to navigate through a two-dimensional array and to activate the desired function. However, if there are only three options displayed in a line on the display means 4, the second and the third function activation signal may also be used for activating the option shown on the left side or the option shown on the right side, respectively.

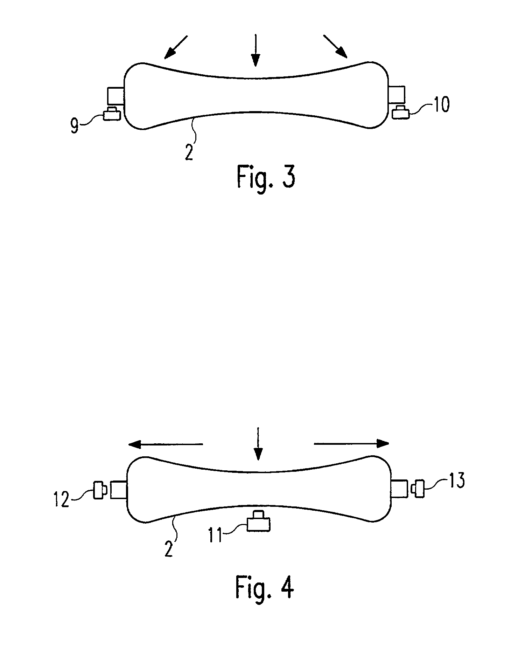

As already mentioned, an actuation of the left and right end portions of the scrolling means 2 may take place in different ways. Figure 3 shows a first embodiment of the scrolling means 2 wherein the left and right end portions are actuated upon pressing down the end portions. In this embodiment, two switches 9 and 10 are arranged under the left and right end portions of the scrolling means 2. If one of the two end portions of the scrolling means 2 is depressed in order to generate a second or third function activation signal one of the two switches 9 and 10 is activated. On the other hand, if the scrolling means 2 is pressed down in its middle part in order to generate the first function activation signal, both switches 9 and 10 are activated simultaneously. This simultaneous activation of both switches 9 and 10 is recognised by software or by electronic means and the desired first function activation signal is generated.

As also shown in figure 3, the first embodiment of the scrolling means 2 has a curved shape in order to provide a tactile feedback for the user. The essentially cylindrical scrolling means 2 has at its middle portion a smaller diameter than at its end portions. Such a curved shape allows the finger of the user to rest securely in the middle of the scrolling means giving a guidance during rolling the scrolling means 2 and a clear feeling when pressing down the scrolling means 2 on its middle portion or on its two end portions. Therefore, an improved handling of the scrolling means 2 is achieved in particular during operations without looking at the scrolling means 2 since the finger of the user can stay all the time on the surface of the scrolling means 2. This allows a very fast navigation, both up or down by rotating the cylinder, and generation of the three different function activation signals. Also, the user can watch the display means during the operation because the finger does not have to move between different keys. Further, because only one finger is needed for the operation, the other fingers can hold the portable telephone secure in the hand.

In the second embodiment of the input device according to the present invention which is shown in figure 4, the second and the third function activation signals are generated upon shifting the scrolling means 2 to the left or to the right. As can be seen from figure 4, in this case the input device contains three switches 11, 12 and 13, the first switch 11 being arranged under the middle portion of the scrolling means 2 and the second and the third switch 12 and 13 being arranged besides the left or right end portion of the scrolling means, respectively. Upon depressing the middle portion of the scrolling means, only the first switch 11 is activated in order to generate the first function activation signal. Upon shifting the scrolling means 2 to the left or to the right either the left switch 12 or the right switch 13 is activated in order to generate the second or third function activation signal. Like in the first embodiments shown in figure 3, the scrolling means 2 shown in figure 4 also has a curved shape with a smaller diameter at its middle portion in order to provide a tactile feedback for the user.

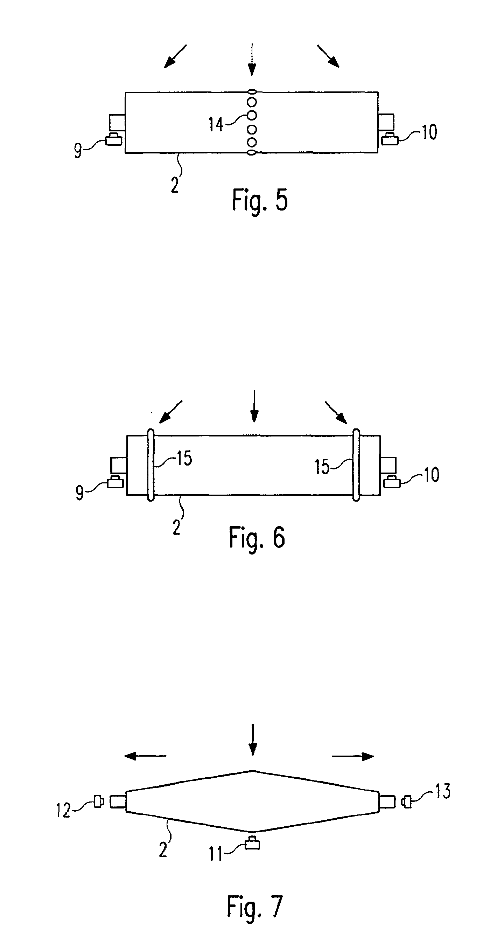

In the third embodiment of the input device shown in figure 5, the cylindrical scrolling means 2 has the same diameter over its whole length. Since the scrolling means 2 is not curved like in the first and second embodiment, a ring of small pads 14 is arranged on the surface of the scrolling means 2 in order to provide a tactile feedback when the user's finger rests on the middle portion of the scrolling means 2. Here, the second and the third function activation signals are again generated upon depressing the left or right end portions of the scrolling means 2. Therefore, again only two switches 9 and 10 are necessary for generating the three different function activation signals; both switches 9 and 10 being activated simultaneously upon depressing the middle portion of the scrolling means 2 and either the left switch 9 or the right switch 10 being actuated upon depressing the left or right end portions.

In the fourth embodiment of the input device according to the present invention shown in figure 6, the scrolling means again has the form of a cylinder. In contrast to the embodiment shown in figure 5 two ring-shaped projections 15 are provided on the surface of the scrolling means 2 on its left and right end portion. Again, the user gets a clear feedback of the position of its finger on the scrolling means 2.

The additional marks shown in figure 5 and figure 6 providing a tactile feedback may also be used with the two first embodiments. However, the curved shape of these two first embodiments alone provides a reasonable clear feedback. Further, in both embodiments shown in figure 5 and 6 three switches may be provided like in figure 4 and the second and third function activation signal may be generated upon shifting the scrolling means 2 instead of pressing it down.

Finally, a fifth embodiment of the input device according to the present invention is shown in figure 7. Again, the scrolling means 2 has a curved shape, but in contrast to the embodiments of the figures 3 and 4 the scrolling means 2 has now a larger diameter at its middle portion than at its end portions. The curved shape of the scrolling means 2 again gives a tactile feedback for a user so that he intuitively knows the position of his finger without lodging the scrolling means 2.

The input device according to the present invention therefore provides the opportunity of generating a plurality of different control signals for operating a portable communication device by using only a single scrolling means. This allows a very fast navigation through different menus or lists and two-dimensional arrays shown on the display of the communication device. By providing additional marks on the surface of the scrolling means or by choosing a curved shape a tactile feedback is provided which improves the handling since a user intuitively knows the position of its finger without watching the input device.

## Claims

1. Input device for entering control signals to a portable communication device (1) of a wireless communication system,
said input device comprising an elongated scrolling means (2) which can be rotated around its axis for generating scrolling signals, and which can be depressed on its middle portion (6) for generating a first function activation signal,
**characterized in,**
**that** the scrolling means (2) further comprises switching means (9, 10; 12, 13) for generating a second and a third function activation signal upon actuation of its left or right end portion (7, 8), respectively.

2. Input device according to claim 1,
**characterized in,**
**that** the switching means (9, 10) for generating the second and the third function activation signal are actuated upon depression of the left or right end portion (7, 8) of the scrolling means (2).

3. Input device according to claim 2,
**characterized in,**
**that** said input device comprises two switches (9, 10) which are arranged under the left and right end portions (7, 8) of the scrolling means (2).

4. Input device according to claim 3,
**characterized in,**
**that** the two switches (9, 10) are actuated simultaneously upon depression of the middle portion of the scrolling means (2) for generating the first function activation signal.

5. Input device according to claim 1,
**characterized in,**
**that** the switching means (12, 13) for generating the second and the third function activation signal are actuated upon shifting the scrolling means (2) to the left or to the right.

6. Input device according to claim 5,
**characterized in,**
**that** said input device comprises three switches (11-13), the first switch (11) being arranged under the middle portion (6) of the scrolling means (2) and the second and third switch (12, 13) being arranged besides the left or right end portion (7, 8) of the scrolling means (2), respectively.

7. Input device according to one of the claims 1 to 6,
**characterized in,**
**that** said scrolling means (2) provides a tactile feedback for the position of a finger.

8. Input device according to claim 7,
**characterized in,**
**that** said scrolling means (2) has at its middle portion a smaller diameter than in its end portions.

9. Input device according to claim 7,
**characterized in,**
**that** said scrolling means (2) has at its middle portion a larger diameter than at its end portions.

10. Input device according to one of the claims 7 to 9,
**characterized in,**
**that** marks are arranged on the surface of the scrolling means (2).

11. Portable communication device (1) of a wireless communication system,
comprising an input device for entering control signals according to one of the claims 1 to 10.

12. Portable communication device (1) of a wireless communication system according to claim 11,
**characterized in,**
**that** the communication device (1) is a portable telephone.
